(19) **Europäisches Patentamt / European Patent Office / Office européen des brevets**

(11) **EP 2 378 706 A1**

(12) **EUROPEAN PATENT APPLICATION**
published in accordance with Art. 153(4) EPC

(43) Date of publication:
**19.10.2011 Bulletin 2011/42**

(51) Int Cl.:
**H04L 9/32** $^{(2006.01)}$

(21) Application number: **09831924.7**

(22) Date of filing: **09.12.2009**

(86) International application number:
**PCT/JP2009/070605**

(87) International publication number:
**WO 2010/067820 (17.06.2010 Gazette 2010/24)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.12.2008 JP 2008316022**

(71) Applicant: **NEC Corporation**
**Minato-ku**
**Tokyo 108-8001 (JP)**

(72) Inventor: **TERANISHI Isamu**
**Tokyo 108-8001 (JP)**

(74) Representative: **Betten & Resch**
**Patentanwälte**
**Theatinerstrasse 8**
**80333 München (DE)**

(54) **ZERO-KNOWLEDGE PROOF SYSTEM, ZERO-KNOWLEDGE PROOF DEVICE, ZERO-KNOWLEDGE VERIFICATION DEVICE, ZERO-KNOWLEDGE PROOF METHOD AND PROGRAM THEREFOR**

(57) Provided is a zero-knowledge proof system that allows a discrete-logarithm zero-knowledge proof. The zero-knowledge proof device includes a temporary memory unit that stores pseudorandom numbers and previously determined hash values, a first processing unit that calculates multiple pseudorandom numbers and performs multiple iterations of processing to calculate hash values based on the calculated pseudorandom numbers and the information stored in the temporary memory unit, a second processing unit that determines some of the multiple pseudorandom numbers based on the hash values, and a third processing unit that re-calculates some of the pseudorandom numbers and sends the hash values obtained to a zero-knowledge verification device. The zero-knowledge verification device includes a temporary memory region, a data receiving module that sequentially receives new input data, and a processing module that overwrites hash values including variables and input data, as variables into the temporary memory region each time the input data are received.

FIG. 1

EP 2 378 706 A1

**Description**

TECHNICAL FIELD

The present invention relates to a discrete-logarithm zero-knowledge proof system. More specifically, the present invention relates to a zero-knowledge proof system, a zero-knowledge proof device, a zero-knowledge verification device, a zero-knowledge proof method and a program therefore, which can decrease a device storage capacity required for zero-knowledge proofs.

BACKGROUND ART

First, the discrete-logarithm zero-knowledge proof will be described. The discrete-logarithm zero-knowledge proof herein is a technique used when a prover as an entity (element) proves to a verifier as an entity a fact that "the prover knows x that satisfies $H = G^x$" without revealing x.

Note here that n is a natural number, G is an clement for Z/nZ, and x is an integer. Further, in the lines other than numerical expressions, "G to the power of x" is expressed as "$G^x$". This technique is utilized greatly in techniques related to cryptography, and applied in various scenes such as public-key cryptography, digital signatures, group signatures, and electronic voting.

Various methods are known as the discrete-logarithm zero-knowledge proofs. Among those, there is a method which excludes message m from the method depicted in Non-Patent Document 1. In order to prove the knowledge of the element x o fZ/nZ which satisfies H $G^x$ with this method, the prover first selects r from Z/nZ randomly, and calculates u by a following expression.

[Expression 1]

$$u = G^r$$

Subsequently, the prover calculates hash value c = H(u) and calculates p = r + cx, and sends a set of (c,p) to the verifier. Upon that, the verifier calculates u by a following expression. When it is found to satisfy c = H(u), the verifier returns "accept" to the prover indicating that the verifier judges the fact the prover is to proof is adequate. If not, the verifier returns "reject" to the prover indicating that the verifier judges the proof is inadequate.

[Expression 2]

$$u = G^p H^{-c}$$

However, with the method depicted in Non-Patent Document 1, even a prover who does not know x can commit perjury that "the prover knows x that satisfies H === $G^x$" with a probability of about $1/q^{(1/3)}$, provided that the order of G is q. Thus, normally, it is necessary to repeat, the above-described processing for a plurality of times in order to reduce the possibility of perjury. Therefore, the processing becomes complicated and time-consuming.

Patent Document 1 discloses a zero-knowledge proof method capable of improving that aspect, which selects N-pieces of random numbers Y1, ---, YN, calculates data Ti from each Yi, calculates hash value Θ (T1, ---, Tn, ---), and further performs a calculation using Y1, -", YIN thereafter. With this method, it is possible to reduce the possibility of perjury committed by the prover who does not know x to pretend that "the prover knows x that satisfies H = $G^{x''}$ to about 1/q.

Further, in addition, there are following documents as technical documents related to the zero-knowledge proofs. Patent Document 2 discloses a technique regarding reception of electronic money, which is regarding a technique for reducing the storage capacity of ID transmitted for a challenge. Patent Document 3 discloses a technique which sequentially generates challenges for a single hash value. Patent Document 4 discloses a technique with which a capacitance for the final receiver to verify the trueness of data is not spoiled even if a middle person erases a signature part of a data stream on which a digital signature has been given.

Patent Document 1: Domestic Republication ofPCT International Application 2006-077701
Patent Document 2: Japanese Unexamined Patent Publication 2000-067141
Patent Document 3: Japanese Unexamined Patent Publication 2003-218858
Patent Document 4: Japanese Patent Application Publication 2007-503134
Non-Patent Document 1: Claus-Peter Schnorr. Efficient Signature Generation by Smart Cards. J. Cryptology4(3): 161-174 (1991)

DISCLOSURE OF THE INVENTION

PROBLEMS TO BE SOLVED BY THE INVENTION

However, the zero-knowledge proof method depicted in Patent Document 1 can be employed, when it is assumed that all the sets of Yi and Θ (TI, ---, Tn, ---) are stored in a main storage device. Yi is data of 300 to 2500 bits, and N is a value of about 1000 to 2000. Thus, storage capacitance of about 130 to 500 megabits is required in the main storage device for achieving this method. Therefore, it is difficult to use the method depicted in Patent Document 1 with devices such as mobile phone terminals and PDAs (Personal Digital Assistants) which only have a smail-capacity main memory device. Patent Documents 2 to 4 and Non-Patent Document 1 disclose no structure that can overcome such issue.
An object of the present, invention is to provide a zero-knowledge proof system, a zero knowledge proof device, a zero-knowledge proof verification device, a zero-knowledge proof method and a program therefore, which can perform discrete-logarithm zero-knowledge proof even with a device that has only a small-capacity main memory device.

MEANS FOR SOLVING THE PROBLEMS

In order to achieve the foregoing object, the zero-knowledge proof system according to the present invention is characterized as a zero-knowledge proof system constituted with a zero-knowledge proof device and a zero-knowledge verification device, which performs discrete-logarithm zero-knowledge proof regarding whether or not "the zero-knowledge proof device knows x that satisfies $H = G^x$"as a verification under a state where the zero-knowledge verification device does not know the x, wherein, the zero-knowledge proof device includes: a temporary memory unit which stores pseudorandom numbers and hash values acquired in the past; a first processing unit which calculates a plurality of pseudorandom numbers from an arbitrary random number sequence and a pseudorandom function, and performs a plurality of iterations of processing to calculate hash values based on the calculated pseudorandom numbers and information stored in the temporary memory unit and to overwrite the calculated pseudorandom numbers and the hash values to the temporary memory unit; a second processing unit which determines a part of the plurality of pseudorandom numbers based on the hash values; and a third processing unit which transmits the hash values acquired by re-calculating the part of the pseudorandom numbers to the zero-knowledge verification device, and the zero-knowledge verification device includes: a data receiving module which sequentially receives new input data from the zero-knowledge proof device; a processing module which overwrites the hash values of data containing a variable and input data stored in a temporary memory unit provided in advance as a new variable onto the temporary memory unit every time the data receiving module receives the input data; and a judging unit which judges whether to authenticate or to reject the zero-knowledge proof device based on the variable, and returns a result of the judgment to the zero-knowledge proof device.
In order to achieve the foregoing object, the zero-knowledge proof device according to the present invention is characterized as a zero-proof knowledge device which works in cooperation with a zero-knowledge verification device to let the zero-knowledge verification device that does not know x verify whether or not "the zero-knowledge proof device itself knows the x that satisfies $H = G^x$", and the zero-knowledge proof device includes: a temporary memory unit which stores pseudorandom numbers and hash values acquired in the past; a first processing unit which calculates pseudorandom numbers from an arbitrary random number sequence and a pseudorandom function, and executes a plurality of iterations of processing to calculate hash values based on the calculated pseudorandom numbers and information stored in the temporary memory unit and to overwrite the calculated pseudorandom numbers and the hash values on the temporary memory unit; a second processing unit which determines a part of the plurality of pseudorandom numbers based on the hash values; a third processing unit which transmits the hash values acquired by re-calculating a part of the pseudorandom numbers to the zero-knowledge verification device; and a data receiving unit which receives data indicating whether to authenticate or to reject from the zero-knowledge verification device after transmitting the hash values to the zero-knowledge verification device.
In order to achieve the foregoing object, the zero-knowledge verification device according to the present invention is characterized as a zero-knowledge verification device which, under a state where the verification device itself does not know x, verifies whether or not "a zero-knowledge proof device knows the x that satisfies $H= G^x$" according to a request from the zero-knowledge proof device, and the zero-knowledge verification device includes: a data receiving module which sequentially receives new input data from the zero-knowledge proof device; a processing module which overwrites hash values of data containing a variable and the input data stored in a temporary memory unit provided in advance as a new variable onto the temporary memory unit every time the data receiving module receives the input data; and a judging unit which judges whether to authenticate or to reject the zero-knowledge proof device based on the variable, and returns a result of the judgment to the zero-knowledge proof device.

In order to achieve the foregoing object, the zero-knowledge proof method according to the present invention is characterized as a method used in a zero-knowledge proof system constituted with a zero-knowledge proof device and a zero-knowledge verification device for performing discrete-logarithm zero-knowledge proof regarding whether or not "the zero-knowledge proof device knows x that satisfies $H = G^{x}$" as a verification under a state where the zero-knowledge verification device does not know the x, wherein, on the zero-knowledge proof device side: a first processing unit calculates a plurality of pseudorandom numbers from an arbitrary random number sequence and a pseudorandom function, and performs a plurality of iterations of processing to calculate hash values based on the calculated pseudorandom numbers and pseudorandom numbers stored in a temporary memory unit provided in advance and hash values acquired in the past and to overwrite the calculated pseudorandom numbers and the hash values onto the temporary memory unit; a second processing unit determines a part of the plurality of pseudorandom numbers outputted to the zero-knowledge verification device based on the hash values; and a third processing unit re-calculates the part of the pseudorandom numbers and transmits the calculated pseudorandom numbers to the zero-knowledge verification device, and on the zero-knowledge verification device side: a data receiving module sequentially receives new input data from the zero-knowledge proof device; a verification module overwrites the hash values of data containing a variable and input data stored in the temporary memory unit as the new variable onto the temporary memory unit provided in advance every time the data receiving module receives the input data; and a judging unit judges whether to authenticate or to reject the zero-knowledge proof device based on the variable, and returns a result of the judgment to the zero-knowledge proof device.

In order to achieve the foregoing object, the zero-knowledge proof program according to the present invention is characterized as a zero-knowledge proof program used for a zero-proof knowledge device for performing discrete-logarithm zero-knowledge proof which works in cooperation with a zero-knowledge verification device to let the zero-knowledge verification device that does not know x verity whether or not "the zero-knowledge proof device itself knows the x that satisfies $H = G^{x}$", and the zero-knowledge program causes a computer to execute: a procedure to store pseudorandom numbers and hash values acquired in the past to a temporary memory unit provided in advance; a procedure to calculate a plurality of pseudorandom numbers from an arbitrary random number sequence and a pseudorandom function and to execute a plurality of iterations of processing to calculate hash values based on the calculated pseudorandom numbers and information stored in the temporary memory unit and to overwrite the calculated pseudorandom numbers and the hash values on the temporary memory unit; a procedure to determine a part of the plurality of pseudorandom numbers based on the hash values; a procedure to transmit the hash values acquired by re-calculating a part of the pseudorandom numbers to the zero-knowledge verification device; and a procedure to receive data indicating whether to authenticate or to reject from the zero-knowledge verification device after transmitting the hash values to the zero-knowledge verification device.

In order to achieve the foregoing object, another zero-knowledge proof program according to the present invention is characterized as a zero-knowledge proof program used for a zero-knowledge verification device for performing discrete-logarithm zero-knowledge proof, which, under a state where the verification device itself does not know x, verifies whether or not "a zero-knowledge proof device knows the x that satisfies $H = G^{x}$" according to a request from the zero-knowledge proof device, and the zero-knowledge proof program causes a computer to execute: a procedure to sequentially receive new input data from the zero-knowledge proof device; a procedure to overwrite hash values of data containing a variable and the input data stored in a temporary memory unit provided in advance as the new variable onto the temporary memory unit every time the data receiving module receives the input data; and a procedure to judge whether to authenticate or to reject the zero-knowledge proof device based on the variable, and returns a result of the judgment to the zero-knowledge proof device.

EFFECT OF THE INVENTION

As described above, the present invention is structured to perform the calculation processing for calculating the hash values while re-utilizing the memory that stores the pseudorandom number and the hash values. Therefore, it is unnecessary to store all the sets of the plurality of random numbers and the corresponding hash values. This makes it possible to perform the discrete-logarithm zero-knowledge proof even with a device that has only a small-capacity main memory device.

BRIEF DESCRIPTION OF THE DRAWINGS

FIG. 1 is an explanatory illustration showing the structure of a zero-knowledge proof system according to a first embodiment of the present invention;

FIG. 2 is a flowchart showing operations of a proof module shown in FIG. 1,

FIG. 3 is a flowchart continued from FIG. 2;

FIG. 4 is a flowchart continued from FIG. 2 and FIG 3;

FIG. 5 is a flowchart showing operations of a verification module shown in FIG. 1;

FIG. 6 is a flowchart continued from FIG. 5;

FIG. 7 is a flowchart continued from FIG. 5 and FIG. 6;

FIG. 8 is an explanatory illustration showing the structure of a zero-knowledge proof system according to a second embodiment of the present invention;

FIG 9 is a flowchart showing operations of a proof module shown in FIG. 8; and

FIG. 10 is a flowchart showing operations of a verification module shown in FIG. 8.

BEST MODES FOR CARRYING OUT THE INVENTION

(FIRST EMBODIMENT)

Hereinafter, structures of embodiments of the present invention will be described by referring to the accompanying drawing.

The basic contents of the embodiment will be described first, and more specific contents thereof will be described thereafter.

A zero-knowledge proof system 1 according to the embodiment is constituted with a zero-knowledge proof device (prover device 10) and a zero-knowledge verification device (verifier device 20). The zero-knowledge proof device (prover device 10) includes: a temporary memory unit (RAM 12) which stores pseudorandom numbers and hash values acquired in the past; a first processing unit 14a which calculates a plurality of pseudorandom numbers from an arbitrary random number sequence and a pseudorandom function, and performs a plurality of iterations of processing to calculate hash values based on the calculated pseudorandom numbers and information stored in the temporary memory unit and to overwrite the calculated pseudorandom numbers and the hash values to the temporary memory unit; a second processing unit 14b which determines a part of the plurality of pseudorandom numbers based on the hash values; and a third processing unit 14c which transmits the hash values acquired by re-calculating the part of the pseudorandom numbers to the zero-knowledge verification device. The zero-knowledge verification device (verifier device 20) includes: a data receiving module (communication interface 23) which sequentially receives new input data from the zero-knowledge proof device; processing modules (first and second processing units 24a. 24b) which overwrite the hash values of data containing a variable and input data stored in a temporary memory unit (RAM 22) provided in advance as a new variable onto the temporary memory unit every time the data receiving module receives input data; and a judging unit (third processing unit 24c) which judges whether to authenticate or to reject the zero-knowledge proof device based on the variable, and returns the judgment result to the zero-knowledge proof device.

Note here that the first processing unit 14a of the zero-knowledge proof device (prover device 10) has a repeat processing function which repeats N-times (N is a natural number of 2 or larger) of processing to read elements G, H of a group, to define initial values of data V showing the pseudorandom numbers, to calculate first and second data pseudorandom function values, and to update the hash values of the data containing V and the first and second data pseudorandom function values Y0 and R0 as new V.

The following second processing unit 14b has a repeat processing function which repeats N-times of processing to give some kind of initial values to data Y that shows a part of the plurality of pseudorandom numbers, and to take a value acquired by adding a value based on a hash value U of data containing V and to Y as new Y.

Further, the following third processing unit 14c has a hash-value output processing function which: repeats N-times of processing to take a residue of Y-th power to G as A, to calculate first and second hash values T0 and T1 based on Y0 and R0 in the j-th processing ($1 \leq j \leq N$), to calculate 1-bit data c from data containing V, A, and j, and to transmit Y0, R0, T1 to the zero-knowledge verification device when c is 0 while transmitting Y1, R1, T0 when c is 1. Further, the zero-knowledge proof device includes a data receiving unit (communication interface 13) which receives data indicating whether to reject or to authenticate, which is returned from the zero-knowledge verification device after transmitting the hash values to the zero-knowledge verification device.

In the meantime, the processing module (verification module 24) of the zero-knowledge verification device (verifier device 20) includes a first processing unit 24a which repeats N-times of processing to read elements G, H of a group, to give some kind of initial values to data V that shows variables; receive data c, data Y, data T, and data R from the zero-knowledge proof device as inputs, to calculate first and second hash values containing Y and R, and to overwrite the values on the temporary memory unit as data V anew.

Further, the processing module includes a second processing unit 24b which repeats N-times of procedure to perform initial setting of data W to 0 and data C to 0, respectively, to take the hash values of data containing V and j as U in the j-th processing ($1 \leqq j \leqq NN$), to take a result acquired by adding W to a product of Wj and U as new W, and to take a result acquired by adding C to a product of Cj and U as new C.

The processing module further includes a third processing unit 24c which repeats a procedure to take a result acquired by multiplying a residue of W-th power to G by a residue of-C-th power to H as A and to output data indicating rejection to stop the zero-knowledge proof device when the hash values of data containing V, A, and j do not match with Cj in the j-th processing ($1 \leqq j \leqq N$), while outputting data indicating to authenticate the zero-knowledge proof device when the data indicating rejection is not outputted after repeating such procedure for N-times.

With such structure, it is unnecessary to store all the sets of the plurality of random numbers and each of corresponding hash values. Therefore, the embodiment makes it possible to perform discrete-logarithm zero-knowledge proof even with the device having only a small-capacity main memory device.

This will be described in more details hereinafter.

Each of $\alpha$, N, $\pi$, $\zeta, \lambda$ $\kappa$, and n is defined as a security parameter. In practical use, $\alpha$, N, $\pi$, $\zeta$, $\lambda$, $\kappa$, and n may be defined as 160, 1304, 60, 60, 1244, 1024, and 1024, respectively. However, for the better security, it is also possible to define $\alpha$, N, $\pi$, $\zeta$ , $\lambda$, $\kappa$, and $\kappa$, and n as 192, 2496, 112, 112, 2384, 2048, and 2048, respectively.

It is defined that n is a nonnegative integer whose bit number is $\alpha$, G is an element of Z/nZ, x is a nonnegative integer of $\lambda$-bit, and H = $G^x$. Here, it is supposed that the zero-knowledge proof system according to the present invention is to prove a fact that "the zero-knowledge proof device knows x that satisfies H = $C^x$"

"$F\lambda+\zeta$" is taken as a pseudorandom function which generates an output of "$\lambda+\zeta$" bit, and the output of "$F\lambda+\zeta$" when data X and a key K are inputted is written as "$F\lambda+\zeta(K, X)$". Similarly, "$F\lambda+\pi$" is taken as a pseudorandom function which generates an output of "$\lambda+\pi$" bits, and the output of "$F\lambda+\pi$" when data X and a key K are inputted is written as "$F\lambda+\pi(K,X)$". Note that and "$\lambda+\pi x$" are subscript letters in actual expressions.

As long as the output satisfies the above-described condition, the output may be used as any kinds of and "$F\lambda+\pi$". For example, functions for corresponding the hash values to (K, X) can be defined as "$F\lambda+\zeta$" and "$F\lambda+\pi$". $\Theta\lambda$, $\Theta\kappa$, and $\Theta 1$ are defined as hash functions whose outputs are $\lambda$-bit, $\kappa$-bit, and 1-bit, respectively. Note that each of the letters $\lambda$, $\kappa$, and 1 of $\Theta\lambda$, $\Theta\kappa$, and $\Theta 1$ are subscript letters in actual expressions.

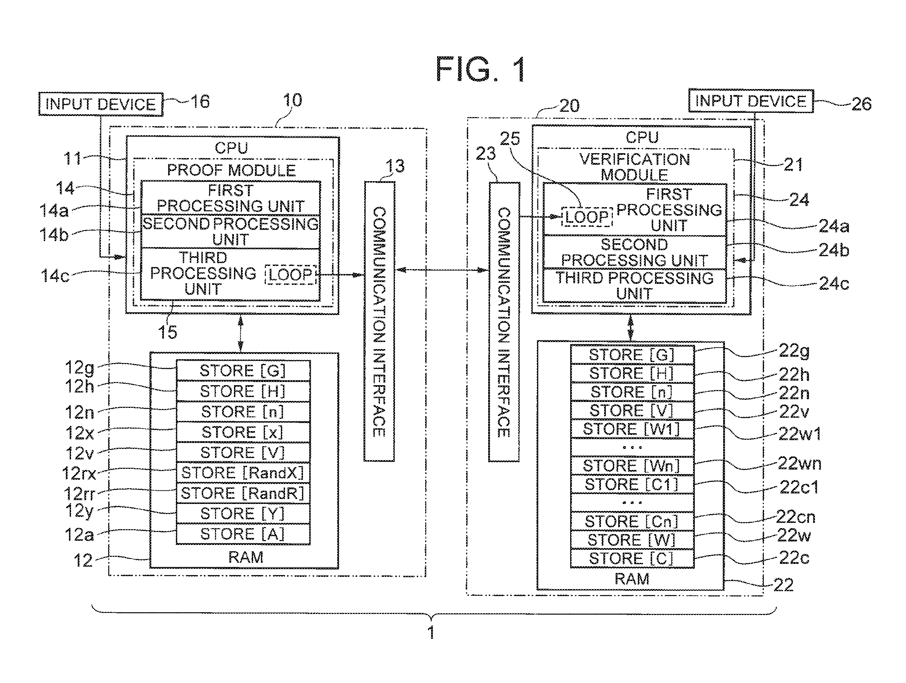

FIG. 1 is an explanatory illustration showing the structure of the zero-knowledge proof system according to the first embodiment of the present invention. The zero-knowledge proof system 1 is constituted with the prover device 10 that is a computer device operated by the prover and the verifier device 20 that is a computer device operated by the verifier, and the prover device 10 and the verifier device 20 are connected mutually.

The prove device 10 includes: a CPU (Central Processing Unit) 11 as a main body for executing computer programs; a RAM (Random Access Memory) 12 to which computer programs executed by the CPU 11 are loaded and stored; and a communication interface 13 which exchanges data with other computers. A proof module 14 that is a computer program executed by the CPU 11 is stored in the RAM 12 and executed. An input device 16 is used for inputting initial data and the like required for operations of the proof module 14.

Similarly, the verifier device 20 includes a CPU 21, a RAM 22, and a communication interface 23. Further, a verification module 24 as a computer program executed by the CPU 21 is stored in the RAM 22 and executed. An input device 26 is used for inputting initial data and the like required for operations of the verification module 24. Tin FIG. 1, the proof module 14 and the verification module 24 are illustrated to exist on the CPUs 11 and 2 to be executed thereby, respectively, for convenience' sake.

There is a loop 15 existing in the algorithm of the proof module 14, and the proof module 14 outputs (c, Y, R, T) to the verifier device 20 via the communication interface 13 every time the loop 15 is executed. There is a loop 25 existing in the algorithm of the verification module 24, and the verification module 24 receives (c, Y, R, T) outputted from the verification module 14 every time the loop 25 is executed. The loops 15 and 25 can be achieved by for text, while text, do-while text, or the like in C++ language, for example. However, it is also possible to achieve the loops 15 and 25 with other program languages by using texts according to each language,

Each of the parameters G, H, n is inputted to the prover device 10 by the prover and to the verifier device 20 by the verifier by using the input devices 16 and 26, respectively. Further, x is inputted to the prover device 10 by the prover by using the input device 16. The prover or the proof module 14 secures storage regions such as STORE[G]12g, STORE[H]12h, STORE[n]12n, and STORE[x]12x on the RAM 12, and writes G, H, n, x to each of those regions, respectively. Similarly, the verifier or the verification device 24 secures storage regions such as STORE[G]22g, STORE[H]22h, and STORE[n]22n on the RAM 22, and writes G, H, n to each of those regions, respectively.

The proof module 14 secures storage regions such as STORE[V]12v, STORE[RandX]12rx, and STORE[RandR] 12rr, STORE[Y]12y, and STORE[A]12a on the RAM 12. Those storage regions are regions required only during executions of the proof module, so that those regions may be dynamically secured when executing the proof module 14. Further, while explanations are provided hereinafter on assumption that the regions are different regions from each other on the RAM 12, a same region may be used for STORE[Y]12y and STORE[A]12a since those regions are not used simultaneously.

Similarly, the verification module 24 secures storage regions such as STORE[V]22v, STORE[W1]22wL ---, STORE[WN]22wn, STORE[C1]22cl, ----, STORE[CN]22cn, STORE[W]22w, and STORE[C]22c on the RAM 22. Those storage regions are regions required only during executions of the verification module 24, so that those regions may be dynamically secured when executing the verification module 24.

(Operations of Proof Module)

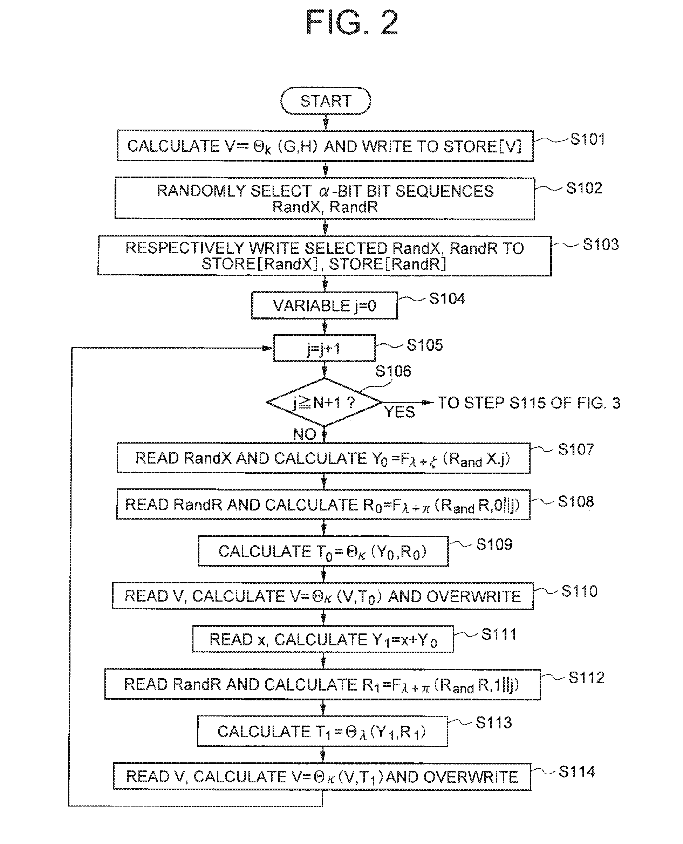

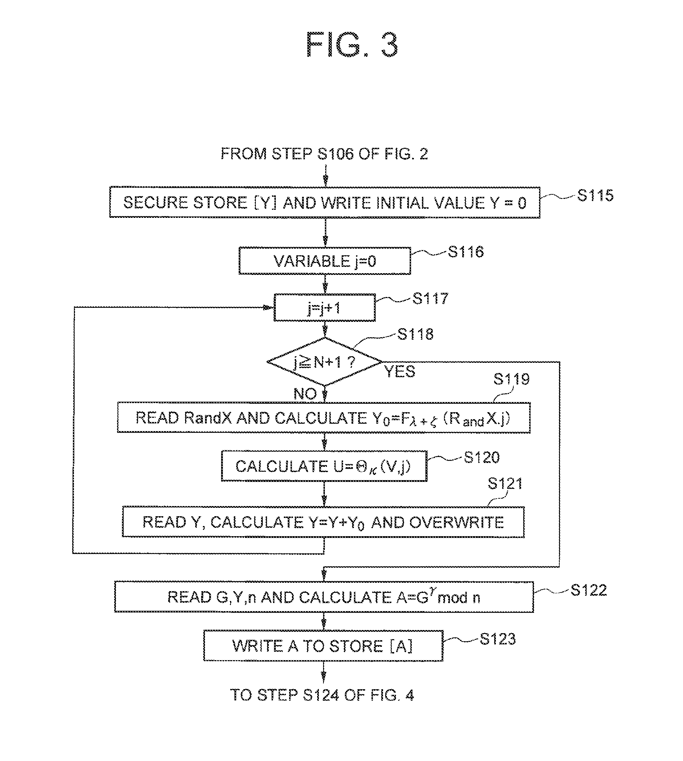

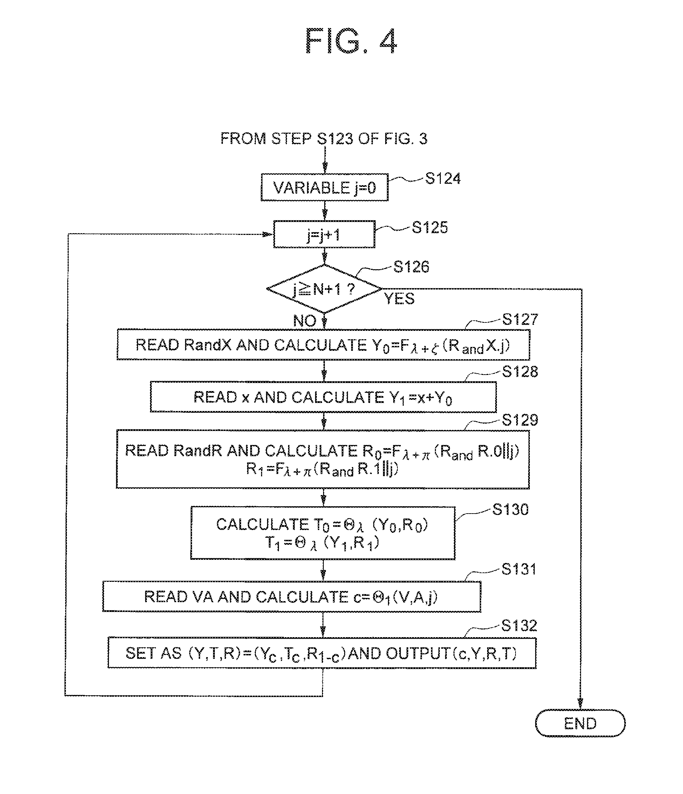

FIG. 2 to FIG. 4 are flowcharts showing operations of the proof module 14 shown in FIG. 1. In FIG. 2 to FiG. 4, a section of the proof module 14, which performs operations (steps S101 to 114) illustrated in FIG. 2, is referred to as a "first processing unit" in Claims, a section of the proof module 14, which performs operations (steps S115 to 123) illustrated in FIG 3, is referred to as a "second processing unit" in Claims, and a section of the proof module 14, which performs operations (steps S124 to 132) illustrated in FIG. 4, is referred to as a "third processing unit" in Claims.

When processing is started, the proof module 14 first calculates $V = \Theta\kappa(G, H)$ by a following expression, and stores V in STORE[V]12v (step S101).

[Expression 3]

$$V = \Theta_K(G, H)$$

Subsequently, the proof module 14 randomly selects RandX and RandR which are both bit sequences of $\alpha$-bit, and writes selected RandX, RandR to STORE[RandX]12rx, STORE(RandR)12rr, respectively (Steps S102 to 103).

Then, the proof module 14 sets initial value of variable j to 0 (step S104), and executes steps S107 to 114 to be described later for each case of j = 1 to N by incrementing j by 1. When it reaches $j \geqq N + 1$, the proof module 14 advances to step S115 to be described later (steps S105 to 106).

The proof module 14 reads RandX from STORE[RandX]12rx, and calculates Y0 by a following expression (step S107).

[Expression 4]

$$Y_0 = F_{\lambda+\xi}(R_{and}X, j)$$

Subsequently, the proof module 14 reads RandR from STORE[RandR]12rr, and calculates R0 by a following expression (step S108).

[Expression 5]

$$R_0 = F_{\lambda+\pi}(R_{and}R, 0 \| j)$$

Further, the proof module 14 calculates T0 by a following expression (step S109).

[Expression 6]

$$T_0 = \Theta_\kappa(Y_0, R_0)$$

Then, the proof module 14 reads V from STORE[V]12v, calculates V by a following expression, and overwrites acquired V on STORE[V]12v (step S110).

[Expression 7]

$$V = \Theta_\kappa(V, T_0)$$

Subsequently, the proof module 14 reads x from STORE[x]12x, and calculates Y1 by a hollowing expression (step S111).

[Expression 8]

$$Y_1 = x + Y_0$$

Then, the proof module 14 reads RandR from STORE[RandR]12rr, and calculates R1 by a following expression (step S112).

[Expression 9]

$$R_1 = F_{\lambda + \pi}(R_{and}R, 1 \| j)$$

The proof module 14 calculates T1 by a following expression from acquired Y1 and R1 (step S113).

[Expression 10]

$$T_1 = \Theta_\lambda(Y_1, R_1)$$

Further, the proof module 14 reads V from STORE[V]12v, calculates V by a following expression, and overwrites acquired V on STORE[V]12v (step S114).

[Expression 11]

$$V = \Theta_K(V, T_1)$$

Thereafter, the processing of the proof module 14 returns to step S105, and the processing of steps S107 to 114 is repeated by incrementing j by 1 until it reaches $j \geqq N + 1$.

When it is judged in step S106 as $j \geqq N + 1$, the proof module 14 secures the storage region STORE[Y] 12y on the RAM 12, sets the initial value of Y as Y = 0, and writes Y to STORE[Y]12y (step S115). Subsequently, the proof module 14 sets the initial value of the variable j to 0 (step S116), and executes steps S 119 to 121 to be described later for each case of j = 1 to N by incrementing j by 1. When it reaches $j \geqq N + 1$, the proof module 14 advances to step S 122 to be described later (steps S 117 to 118),

The proof module 14 reads RandX from STORE[RandX]12rx, and calculates Y0 by a following expression (step S119).

[Expression 12]

$$Y_0 = F_{\lambda + \xi}(R_{and}X, j)$$

Subsequently, the proof module 14 calculates U by a following expression (step S120).

[Expression 13]

$$U = \Theta_K(V, j)$$

Then, the proof module 14 reads Y from STORE[Y]12y, calculates Y by a following expression, and overwrites acquired Y on STORE[Y]12y (step S121).

[Expression 14]

$$Y = Y + Y_0$$

When it is judged in step S118 as $j \geqq N + 1$, the proof module 14 reads each of G, Y, n from STORE[G]12g, STORE[Y]12y, STORE[n]12n to calculate A by a following expression (step S122), and writes acquired A to STORE[A] (step S123). In a case where STORE[Y]12y and STOR-E[A]12a use different storage regions, STORE[Y]12y may be released since STORE[Y] 12y is not used in the following steps.

[Expression 15]

$$A = G^Y \bmod n$$

Subsequently, the proof module 14 sets the initial value of the variable j to 0 (step S124), and executes steps S 127 to 132 to be described later for each case of = 1 to N by incrementing j by 1. When it reaches $j \geqq N + 1$, the proof module 14 ends the processing (steps S125 to 126). The steps 127 to 132 are the loop 15 described above.

The proof module 14 reads RandX from STORE[RandX]12rx, and calculates Y0 by a following expression (step S127).

[Expression 16]

$$Y_0 = F_{\lambda + \xi}(R_{and}X, j)$$

thereafter, the proof module 14 reads x from STORE[x]12x, and calculates Y1 by a following expression (step S128).

[Expression 17]

$$Y_1 = X + Y_0$$

Then, the proof module 14 reads RandR from STORE[RandR]12rr, and calculates R0 and R1 by a following expression (step S129).

[Expression 18]

$$R_0 = F_{\lambda + \pi}(R_{and}R, 0 \| j)$$

$$R_1 = F_{\lambda + \pi}(R_{and}R, 1 \| j)$$

Further, the proof module 14 calculates T0 and T1 by a following expression (step $S13_0$).

[Expression 19]

$$T_0 = \Theta_\lambda(Y_0, R_0)$$

$$T_1 = \Theta_\lambda(Y_1, R_1)$$

Then, the proof module 14 reads each of V and A from STORE[V]12v and STORE[A]12a, and calculates c by a following expression (step S131).

[Expression 20]

$$c = \Theta_1(V, A, j)$$

At last, the proof module 14 calculates each of Y, T, R by a following expression, and outputs (c, Y, R, T) to the verifier device 20 via the communication interface 13 (step S132).

[Expression 21]

$$(Y, T, R) = (Y_c, T_c, R_{1-c})$$

(Operations of Verification Module)

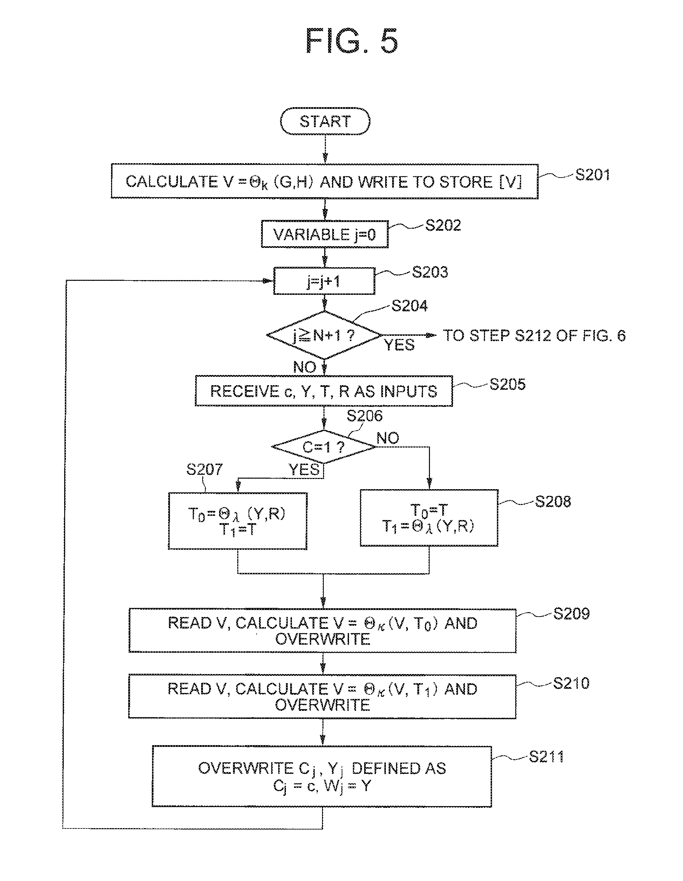

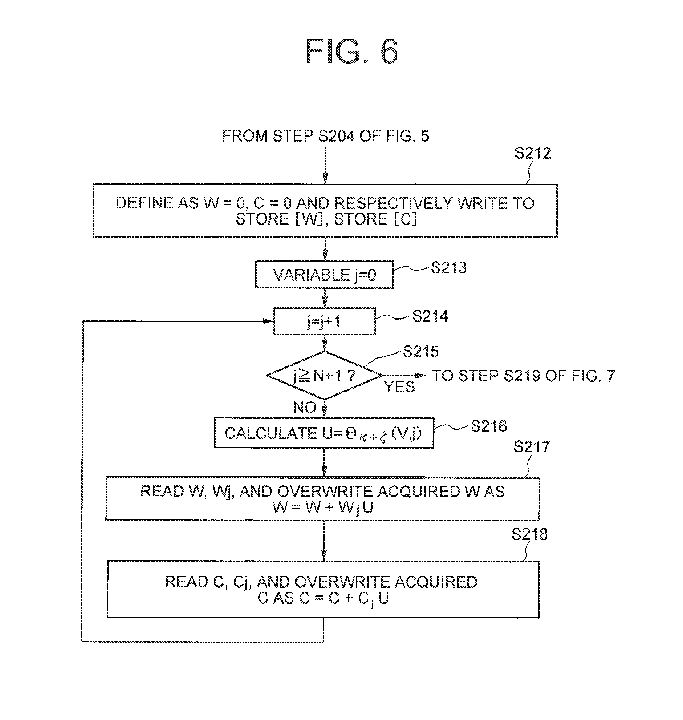

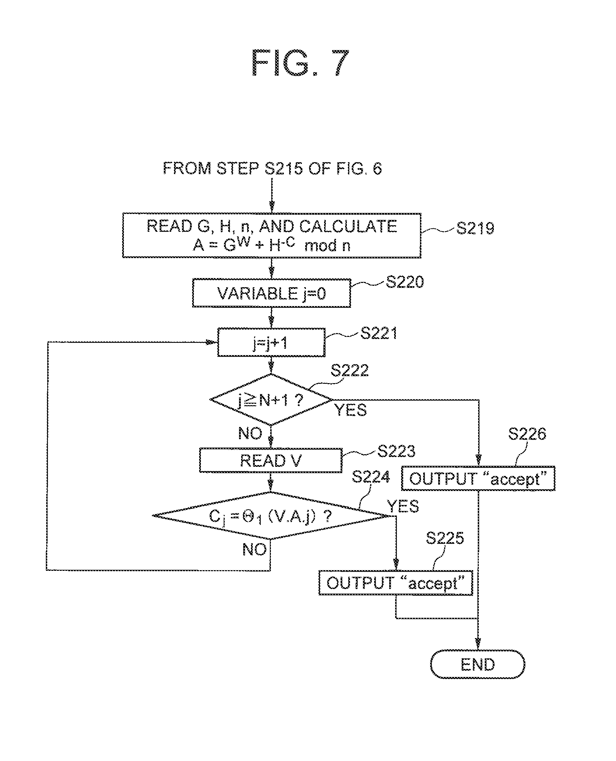

FIG. 5 to FIG. 7 are flowcharts showing operations of the verification module 24 shown in FIG. 1. In FIG. 5 to FIG. 7, a section of the verification module 24, which performs operations (steps S201 1 to 211) illustrated in FIG. 5, is referred to as a "first processing unit" in Claims, and a section of the verification module 24, which performs operations (steps S212 to 218) illustrated in FIG. 6, is referred to as a "second processing unit" in Claims. The "first processing unit" and the "second processing unit" are collectively referred to as a "processing module". A section of the verification module 24, which performs operations (steps S219 to 226) illustrated in FIG. 7, is referred to as a "judging unit" or a "third processing unit" in Claims.
When processing is started, the verification module 24 first calculates V by a following expression from G and H given in advance, and writes acquired V to STORE[V]22v (step S201).

[Expression 22]

$$V = \Theta_K(G, H)$$

Then, the verification module 24 sets the initial value of the variable j to 0 (step S202), and executes steps S205 to 211 to be described later for each case of j = 1 to N by incrementing j by 1. When it reaches $j \geqq N + 1$, the verification module 24 advances to step S212 to be described later (steps S203 to 204). The steps 205 to 211 are the loop 25 described above.

The verification module 24 receives each numerical value of c, Y, T, R transmitted from the proof module 14 as inputs (step S205). Subsequently, the verification module 24 judges whether c = 1 or c = 0, and calculates T0 and T1 by using Expression 23 when c = 1 and by using Expression 24 when c = 0 (steps S206 to 208).

[Expression 23]

$$T_0 = \Theta_\lambda(Y, R)$$

$$T_1 = T$$

[Expression 24]

$$T_0 = T$$

$$T_1 = \Theta_\lambda(Y, R)$$

Subsequently, the verification module 24 reads the value of V stored in STORE[V]22v, calculates V by a following expression, and overwrites acquired V on STORE[V]22v (step S209).

[Expression 25]

$$V = \Theta_K(V, T_0)$$

Further, the verification module 24 reads the value of V stored in STORE[V]22v again, calculates V by a following expression, and further overwrites acquired V on STORE[V]22v (step S210).

[Expression 26]

$$V = \Theta_K(V, T_1)$$

Then, the verification module 24 defines Cj and Wj as in following expressions, and writes defined Cj and Wj to STORE[Cj]22cj and STORE[Wj]22wj, respectively (step S211).

[Expression 27]

$$C_j = c$$

$$W_j = Y$$

Thereafter, the processing of the verification module 24 returns to step S203, and the processing of steps S205 to 211 is repeated until it reaches $j \geqq N + 1$ by incrementing j by 1.

When it is judged in step S204 as $j \geqq N + 1$, the verification module 24 defines as W = 0, C = 0, and writes W, C to STORE[W]22w, STORE[C]22c, respectively (step S212). Then, the verification module 24 sets the initial value of the variable j to 0 (step S213), and executes steps S216 to 218 to be described later for each case of j = 1 to N by incrementing j by 1. When it reaches $j \geqq N + 1$, the verification module 24 advances to step S212 to be described later (steps S214 to 215).

The verification module 24 calculates U by a following expression (step S216).

[Expression 28]

$$U = \Theta_{\kappa + \xi}(V, j)$$

Then, the verification module 24 reads W, Wj from STORE[W]22w, STORE[Wj]22wj, respectively, calculates W by a following expression by using the value of U calculated in step S216, and overwrites acquired W on STORE[W] (step S217).

[Expression 29]

$$W = W + W_j U$$

Similarly, the verification module 24 reads C, Cj from STORE[C]22c, STORE[Cj]2cj, respectively, calculates C by a following expression, and overwrites acquired C on STORE[C] 22c (step S218).

[Expression 30]

$$C = C + C_j U$$

Thereafter, the processing of the verification module 24 returns to step S214, and the processing of steps S216 to 218 is repeated by incrementing j by 1 until it reaches $j \geqq N + 1$.

When it is judged in step S214 as $j \geqq N + 1$, the verification module 24 reads G, H, n from STORE[G]22g, STORE[H]22h, STORE[n]22n, respectively, and calculates A by a following expression (step S219).

[Expression 31]

$$A = G^{W} + H^{-C} \bmod n$$

Then, the verification module 24 sets the initial value of the variable j to 0 (step S220), and executes steps S223 to 224 to be described later for each case of = 1 to N by incrementing j by 1, When it reaches $j \geqq N + 1$, the verification module 24 advances to step S226 to be described later (steps S221 to 222).

The verification module 24 reads V from STORE[V]22v, and judges whether or not the condition regarding Cj shown by a following expression applies (steps S223 to 224). When judged that it applies, the verification module 24 outputs "reject" to the prover device 10 (details thereof will be described later), and ends the processing (step S225).

[Expression 32]

$$C_{j} \neq \Theta_{1}(V, A, j)$$

When the condition shown in Expression 32 does not apply, the verification module 24 executes nothing special but returns to the processing of step S221, and repeats the processing of steps S223 to 224 until it reaches i N + 1 by incrementing j by 1.

If "reject" has not been outputted till then even when it is judged in step S222 as $j \geqq N + 1$, the verification module 24 outputs "accept" to the prover device 10 (details thereof will be described later) and ends the processing (step S226).

"reject" outputted from the verification module 24 to the prover device 10 means that the verifier device 20 has judged that the fact to be proved by the prover device 10 is inadequate, while "accept" means that it is adequate. Upon receiving "accept" or "reject" output from the verifier device 20, the prover device 10 may inform so to the user via a display device, for example. Further, it is also possible to inform so to another program that uses the zero-knowledge proof as a sub-routine within the prover device 10 so as to continue the processing by the program upon receiving an "accept" output and to stop the processing there upon receiving a "reject" output.

(Overall Operations of First Embodiment)

Next, the overall operations of the embodiment, will be described. The operations according to the embodiment are as follows. On the zero-knowledge proof device side of the zero-knowledge proof system 1 constituted with the zero-knowledge proof device (prover device 10) and the zero-knowledge verifier device (verifier device 20), the first processing unit 14a calculates pseudorandom numbers from an arbitrary random number sequence and a pseudorandom function (FIG. 2: steps S107 to 108), and the first processing unit executes a plurality of times of processing which calculates the hash values based on the calculated pseudorandom numbers, the pseudorandom numbers stored in the temporary memory unit (RAM l2) provided in advance, and the hash values acquired in the past, and overwrites the calculated pseudorandom numbers and hash values on the temporary memory unit (FIG. 2: steps S109 to 114), the second processing unit 14b determines a part of the plurality of pseudorandom numbers outputted to the zero-knowledge proof device based on the hash values (FIG. 3: steps S115 to 122), and the third processing unit transmits the hash values acquired by re-calculating a part of the pseudorandom numbers to the zero-knowledge verification device (FIG. 4: steps S125 to 132). On the zero-knowledge verification device side, the data receiving module (communication interface 23) receives new input data sequentially from the zero-knowledge proof device (FIG. 5: step S205), the verification, module 24 overwrites the hash value of input data containing the variable stored in the temporary memory unit (RAM 22) provided in advance and the input data as a new variable on the temporary memory unit every time the data receiving module receives the input data (FIG. 5: steps S209 to 210), judges whether to authenticate or to reject the zero-knowledge proof device based on the variable, and returns the result of judgment to the zero-knowledge proof device (FIG. 7: steps S219 to 226).

Note here that the first processing unit 14a of the zero-knowledge proof device repeats N-times (N is a natural number of 2 or larger) of processing to read elements G, H of a group (FIG. 2: steps S101), to read integer x, to define initial values of data V showing the pseudorandom numbers, to calculate first and second pseudorandom function values, and to update the hash values of the data containing V and the first and second data pseudorandom function values Y0 and R0 as new V (FIG. 2: steps S107 to 114).

Subsequently, the following second processing unit 14b of the zero-knowledge proof device repeats N-times of processing to give some kind of initial value to data Y that shows a part of the plurality of pseudorandom numbers, and to take a value acquired by adding a value based on a hash value U of data containing V and j to Y as new Y in the j-th processing ($1 \leqq j \leqq N$) (FIG. 3: steps S119 to 121).

Further, the third processing unit 14c of the zero-knowledge proof device repeats N-times of processing to take a residue ofY-th power to G as A (FIG. 4: steps S127 to 132), to calculate first and second hash values T0 and T1 based on Y0 and R0 in the j-th processing ($1 \leqq j \leqq N$) (FIG. 4: steps S127 to 130), to calculate 1-bit data c from data containing V, A, and j (FIG. 4: step S131), and to transmit Y0, R0, T1 to the zero-knowledge verification device 20 when c is 0, while transmitting Y1, R1, T0 when c is 1 (FIG. 4: step S132),

The first processing unit 24a provided to the processing module 24 of the zero-knowledge verification device (verifier device 20) repeats N-times of processing to read elements G, H of a group, to give some kind of initial values to data V that shows variables (FIG. 5: step S201), receives data c, data Y, data T, and data R from the zero-knowledge proof device 10 as inputs in the j-th processing ($1 \leqq j \leqq N$) (FIG. 5: step S205), to calculate first and second hash values containing Y and R, and to overwrite the values on the temporary memory unit as data V anew (FIG. 5: steps S207 to 211).

Subsequently, the second processing unit 24b repeats N-times of procedure which performs initial setting of data W to 0 and data C to 0, respectively (FIG. 6: step S212), takes the hash value of data containing V and j as U in the j-th processing ($1 \leqq j \leqq N$) (FIG. 6: step S216), takes a result acquired by adding W to a product of Wj and U as new W (FIG. 6: step S217); and takes a result acquired by adding C to a product of Cj and U as new C (FIG. 6: step S218).

Subsequently, the third processing unit 24c repeats N-times of procedure to take a result acquired by multiplying a residue of W-th power to G by a minus-power residue of the data C calculate by the second processing unit to H as A (FIG. 7: step S219), and output data (reject) indicating rejection to stop the zero-knowledge proof device when the hash value of data containing V, A, and j does not match with Cj in the j-th processing ($1 \leqq j \leqq N$) (FIG. 7: steps S224 to 225), while outputting data (accept) indicating to authenticate the zero-knowledge proof device when "reject" is not outputted after repeating that procedure for N-times (FIG. 7: step S226).

Each of the above-described operation steps may be put into programs that can be executed by a computer, and those programs may be executed by the prover device 10 and the verifier device 20 which are computers directly executing each of the above-described steps. With those operations, the embodiment can provide following effects.

This embodiment makes it possible to reduce the required storage capacity compared to the technique depicted in Patent Document 1. The reasons are as follows. The first reason is that some of data such as Yi in the embodiment are generated by the pseudorandom function using a same key. As a result, it becomes possible to calculate those data from the key as necessary only through storing the key of the pseudorandom function. Therefore, it is unnecessary to store those data, thereby making it possible to reduce the required storage capacity.

The second reason is that the method for calculating the hash value is changed. With the technique depicted in Patent Document 1, it is necessary to store all of T1 to TN simultaneously and calculate hash values V = Θ(T1, ---, TN) at once. Thus, it is necessary to provide the storage capacity proportional to N. In the meantime, the embodiment is designed to calculate the hash value by initializing V to an empty sequence first, and calculating V = Θ(V, Ti) for i = 1 to N. Thus, Ti can be erased after V = Θ(V, Ti) is calculated. Therefore, it is not necessary to store an of T1, ---, TN simultaneously, and the value with which calculation is completed can be erased in order.

The third reason is that the data output is done in a subdivided manner. With the technique depicted in Patent Document 1, the data is outputted after completing all the calculations of the data to be outputted. Thus, the amount of data to be outputted becomes proportional to N. In the meantime, with the embodiment, the data with which the calculation is completed can be erased from the storage region after the output is done at that point.

Therefore, the required storage capacity can be reduced to be small with the embodiment. Thereby, the embodiment can be utilized even with the device whose storage capacity is small.


(SECOND EMBODIMENT)


Structures of a network, hardware, and a rough structure of software according to a second embodiment of the present invention are the same as those of the first embodiment described by referring to FIG. 1 to FIG. 7. The different points of the second embodiment with respect to the first embodiment described above are that the zero-knowledge proof device (prover device 10) includes a first storage device (storage 317) which collectively stores and outputs sets of pseudorandom numbers and hash values outputted to the zero-knowledge verification device (verifier device 20), and that the zero-proof verification device (verifier device 20) includes a second storage device (storage 327) which collectively stores the sets of the pseudorandom numbers and hash values received at the date receiving module from the zero-knowledge proof device (prover device 10).

The storage device has a larger storage capacity per unit price compared to a volatile storage module, so that it is easy to achieve a mass storage capacity. It is possible with this embodiment to also achieve the same effects as those of the first embodiment by having such structure.

This will be described in more details hereinafter.

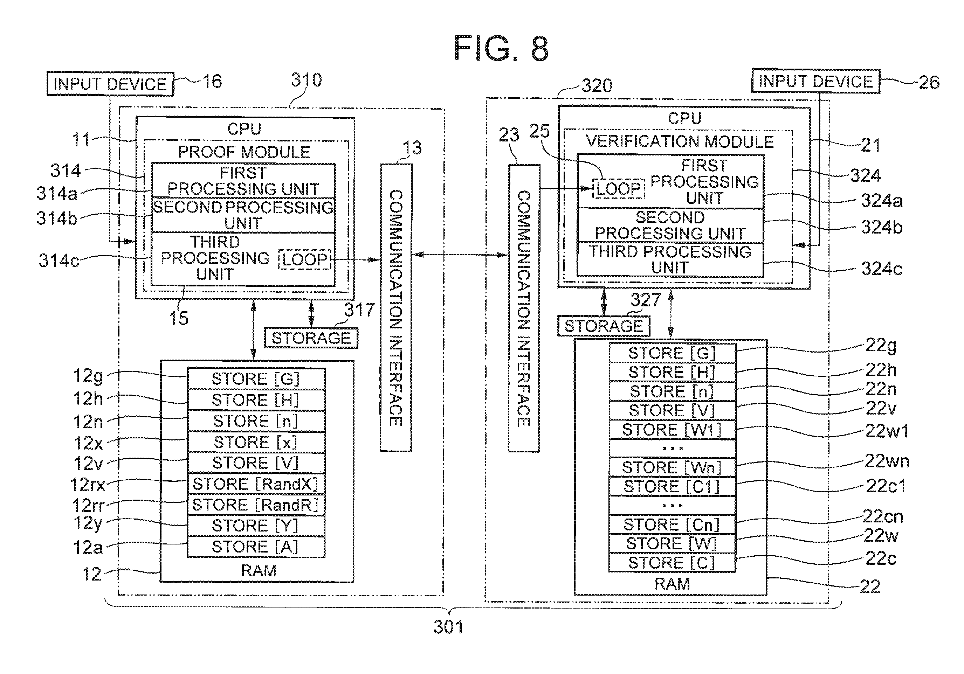

FIG. 8 is an explanatory illustration showing the structure of a zero-knowledge proof system 301 according to the second embodiment of the present invention. The zero-knowledge proof system 301 is constituted with a prover device 310 that is a computer device operated by the prover and a verifier device 320 that is a computer device operated by the verifier, and the prover device 310 and the verifier device3 20 are connected mutually. The same names and reference numerals are applied to same elements as those of the first embodiment.

The prover device 310 includes a CPU 11, a RAM 12, a communication interface 13, and an input device 16 as in the case of the prover device 10 according to the first embodiment. In addition, the prover device 310 includes the storage 317 that is a mass-capacity non-volatile storage module. The storage 317 specifically is a hard disk or a flash memory, for example. A proof module 314 as a computer program executed by the CPU 11 is stored in the RAM 12 and executed.

Similarly, the verifier device 320 includes a CPU 21, a RAM 22, a communication interface 23, and an input device 26. In addition, the verifier device 320 includes the storage 327 that is a mass-capacity non-volatile storage module such as a hard disk or a flash memory. A verification module 324 as a computer program executed by the CPU 21 is stored in the RAM 22 and executed.

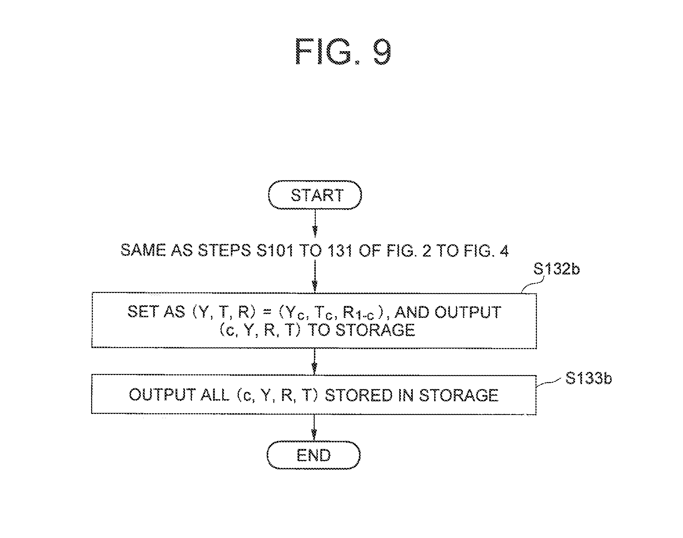

FIG. 9 is a flowchart, showing the operations of the proof module 314 shown in FIG. 8. FIG. 9 only shows the different points with respect to the operations of the proof module 14 shown in FIG. 2 to FIG. 4. The operations of steps S101 to 131 are the same as the operations of the proof module 14 shown in FIG. 2 to FIG. 4. However, (c, Y, R, T) calculated in step S132 are not transmitted to the verifier device 20 but saved in the storage 317 (step S132b). Further, when it reaches $j \geqq N + 1$ in step S126, all (c, Y R, T) saved in the storage 317 are transmitted to the verifier device 320 via the communication interface 13 (step S133b), and the processing is ended thereafter.

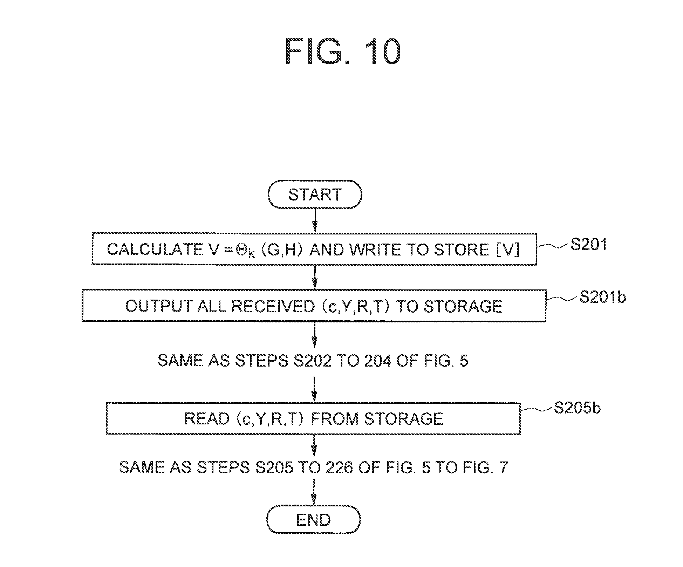

FIG. 10 is a flowchart showing the operations of the verification module 324 shown in FIG. 8. After step S201, the verification module 324 receives all (c, Y, R, T) from the proof module 314, and saves those in the storage 327 (step S201b). The operations thereafter are the same as the operations of the verification module 24 shown in FIG. 5 to FIG. 7, i.e., steps S202 to 226, except that step S205 is changed to "read data from the storage 327" (step S205b).

The storages 317 and 327 as the non-volatile storage modules have a larger storage capacity per unit price compared to the RAMs 12 and 22 as the volatile storage modules, so that it is easy to achieve a mass storage capacity. Therefore, it is also possible with the second embodiment to achieve the same effects as those of the first embodiment.

While the present invention has been described heretofore by referring to the specific embodiments illustrated in the drawings, the present invention is not limited only to the embodiments shown in the drawings. Any known structures can be employed, as long as the effects of the present invention can be achieved therewith.

While cases of building the embodiments of the present invention as hardware are described in the above, the functions of the zero-knowledge proof system, the zero-knowledge proof device, and the zero-knowledge verification device may also be built as programs achieved on software. In that case, the programs are recorded on a recording medium and can be treated as commercial dealings.

This Application claims the Priority right based on Japanese Patent Application No. 2008-316022 filed on December 11, 2008 and the disclosure thereof is hereby incorporated by reference in its entirety.

INDUSTRIAL APPLICABILITY

The present invention can be utilized broadly in scenes where the discrete-logarithm zero-knowledge proofs are utilized. More specifically, the present invention can be utilized for public-key cryptography, digital signatures, group signatures, electronic voting, and the like. Particularly, the present invention is suited for utilizing such technique in devices with a small storage capacity such as mobile phone terminals and PDAs (Personal Digital Assistants).

REFERENCE NUMERALS

| | |
|---|---|
| 1, 301 | Zero-knowledge proof system |
| 10, 310 | Proper device |
| 11, 21 | CPU |
| 12, 22 | RAM |

| | |
|---|---|
| 12g | STORE[G] |
| 12h | STORE[H] |
| 12n | STORE[n] |
| 12x | STORE[x] |
| 12v | STORE[V] |
| 12rx | STORE[RandX] |
| 12rr | STORE[RandR] |
| 12y | STORE[Y] |
| 12a | STORE[A] |
| 13,23 | Communication interface |
| 14, 314 | Proof module |
| 14a, 24a, 324a | First processing unit |
| 14b, 24b | Second processing unit |
| 14c, 24c, 314c | Third processing unit |
| 15, 25 | Loop |
| 16, 26 | Input device |
| 20, 320 | Verifier device |
| 22g | STORE[G] |
| 22h | STORE[H] |
| 22n | STORE[n] |
| 22v | STORE[V] |
| 22wl | STORE[W1] |
| 22wn | STORE[WN] |
| 22c1 | STORE[C1] |
| 22cn | STORE[CN] |
| 22w | STORE[W] |
| 22c | STORE[C] |
| 24, 324 | Verification module |
| 317, 327 | Storage |

**Claims**

1. A zero-knowledge proof system constituted with a zero-knowledge proof device and a zero-knowledge verification device, which performs discrete-logarithm zero-knowledge proof regarding whether or not "the zero-knowledge proof device knows x that satisfies $H = G^x$" as a verification under a state where the zero-knowledge verification device does not know the x, wherein

the zero-knowledge proof device comprises: temporary memory means for storing pseudorandom numbers and hash values acquired in the past; first processing means for calculating a plurality of pseudorandom numbers from an arbitrary random number sequence and a pseudorandom function, and performing a plurality of iterations of processing to calculate hash values based on the calculated pseudorandom numbers and information stored in the temporary memory means and to overwrite the calculated pseudorandom numbers and the hash values to the temporary memory means; second processing means for determining a part of the plurality of pseudorandom numbers based on the hash values; and third processing means for transmitting the hash values acquired by re-calculating the part of the pseudorandom numbers to the zero-knowledge verification device, and

the zero-knowledge verification device comprises: data receiving means for sequentially receiving new input data from the zero-knowledge proof device; processing means for overwriting the hash values of data containing a variable and input data stored in temporary memory means provided in advance as a new variable onto the temporary memory means every time the data receiving means receives the input data; and judging means for judging whether to authenticate or to reject the zero-knowledge proof device based on the variable, and returning a result of the judgment to the zero-knowledge proof device.

2. The zero-knowledge proof system as claimed in claim 1, wherein:

the first processing means of the zero-knowledge proof device has a repeat processing function which repeats N-times (N is a natural number of 2 or larger) of processing to read elements G, H of a group, to define initial values of data V showing the pseudorandom numbers, to calculate first and second data pseudorandom function values, and to update the hash values of the data containing V and the first and second data pseudorandom function values Y0 and R0 as new V;

the second processing means of the zero-knowledge proof device has a repeat processing function which repeats N-times of processing to give some kind of initial values to data Y that shows a part of the plurality of pseudorandom numbers, and to take a value acquired by adding a value based on a hash value U of data containing the V and the j to the Y as new Y in j-th processing ($1 \leqq j \leqq N$); and

the third processing means of the zero-knowledge proof device has a hash-value output processing function which: repeats N-times of processing to take a residue of the Y-th power to the G as A, to calculate first and second hash values T0 and T1 based on the Y0 and the R0 in the j-th processing ($1 \leqq j \leqq N$), to calculate 1-bit data c of from data containing the V, the A, and the j, and to transmit the Y0, the R0, the T1 to the zero-knowledge verification device when the c is 0 while transmitting the Y1, the R1, the T0 when c is 1.

3. The zero-knowledge proof system as claimed in claim 2, wherein

the processing means of the zero-knowledge verification device comprises;

first processing means for repeating N-times of processing to read elements G, H of a group, to give some kind of initial values to data V that shows the variables, to receive data c, data Y, data T, and data R from the zero-knowledge proof device as inputs, to calculate first and second hash values containing the Y and the R, and to overwrite the values on the temporary memory unit as data V anew; and

second processing means for repeating N-times of procedure to perform initial setting of data W to 0 and data C to 0, respectively, to take the hash value of data containing the V and the j as U in the j~th processing containing ($1 \leqq j \leqq N$), to take a result acquired by adding the W to a product of the Wj and the U as new W, and to take a result acquired by adding the C to a product of the Cj and the U as new C; and

the judging means of the zero-knowledge verification device comprises a third processing means for repeating a procedure to take a result acquired by multiplying a residue of W-th power to G by a residue of -C-th power to H as A and to output data indicating rejection to stop the zero-knowledge proof device when the hash values containing the V, the A, and the j do not match with the Cj in the j-th processing ($1 \leqq j \leqq N$), while outputting data indicating to authenticate the zero-knowledge proof device when the data indicating rejection is not outputted after repeating such procedure for N-times.

4. The zero-knowledge proof system as claimed in any one of claims 1 to 3, wherein:

the xero-knowledge proof device comprises storage means for collectively storing sets of the pseudorandom numbers and the hash values outputted to the zero-knowledge verification device and outputting the sets to the zero-knowledge verification device; and

the zero-knowledge verification device comprises storage means for collectively storing the sets of the pseudorandom numbers and hash values received at the data receiving module from the zero-knowledge proof device.

5. A zero-knowledge proof device which works in cooperation with a zero-knowledge verification device to let the zero-knowledge verification device that does not know x verify whether or not "the zero-knowledge proof device itself knows the x that satisfies $H = G^{x}$'' the zero-knowledge proof device comprising:

temporary memory means for storing pseudorandom numbers and hash values acquired in the past;

first processing means for calculating a plurality of pseudorandom numbers from an arbitrary random number sequence and a pseudorandom function, and executing a plurality of iterations of processing to calculate hash values based on the calculated pseudorandom numbers and information stored in the temporary memory means and to overwrite the calculated pseudorandom numbers and the hash values on the temporary memory means;

second processing means for determining a part of the plurality of pseudorandom numbers based on the hash values;

third processing means for transmitting the hash values acquired by re-calculating a part of the pseudorandom numbers to the zero-knowledge verification device; and

data receiving means for receiving data indicating whether to authenticate or to reject from the zero-knowledge verification device after transmitting the hash values to the zero-knowledge verification device.

6. A zero-knowledge verification device which, under a state where the verification device itself does not know x, verifies whether or not "a zero-knowledge proof device knows the x that satisfies $H = C^{x}$" according to a request from the zero-knowledge proof device, the zero-knowledge verification device comprising:

data receiving means for sequentially receiving new input data from the zero-knowledge proof device;

processing means for overwrites hash values of data containing a variable and the input data stored in temporary memory means provided in advance as a new variable onto the temporary memory means every time the data receiving means receives the input data; and

judging means for judging whether to authenticate or to reject the zero-knowledge proof device based on the variable, and returning a result of the judgment to the zero-knowledge proof device.

7. A method used in a zero-knowledge proof system constituted with a zero-knowledge proof device and a zero-knowledge verification device for performing discrete-logarithm zero-knowledge proof regarding whether or not "the zero-knowledge proof device knows x that satisfies $H = G^{x}$'' as a verification under a state where the zero-knowledge verification device does not know the x, wherein

on the zero-knowledge proof device side: a first processing unit calculates a plurality of pseudorandom numbers from an arbitrary random number sequence and a pseudorandom function, and performs a plurality of iterations of processing to calculate hash values based on the calculated pseudorandom numbers and pseudorandom numbers stored in a temporary memory unit provided in advance and hash values acquired in the past and to overwrite the calculated pseudorandom numbers and the hash values onto the temporary memory unit; a second processing unit determines a part of the plurality of pseudorandom numbers to be outputted to the zero-knowledge verification device based on the hash values; and a third processing unit re-calculates the part of the pseudorandom numbers and transmits the calculated pseudorandom numbers to the zero-knowledge verification device, and

on the zero-knowledge verification device side: a data receiving module sequentially receives new input data from the zero-knowledge proof device; a verification module overwrites the hash values of data containing a variable and input data stored in the temporary memory unit as the new variable onto the temporary memory unit provided in advance every time the data receiving module receives the input data; and a judging unit judges whether to authenticate or to reject the zero-knowledge proof device based on the variable, and returns a result of the judgment to the zero-knowledge proof device.

8. A zero-knowledge proof program used for a zero-proof knowledge device which works in cooperation with a zero-knowledge verification device to let the zero-knowledge verification device that does not know x verify whether or not "the zero-knowledge proof device itself knows the x that satisfies $H = G^{x}$'', the zero-knowledge program causing a computer to execute:

a procedure to store pseudorandom numbers and hash values acquired in the past to a temporary memory unit provided in advance;

a procedure to calculate a plurality of pseudorandom numbers from an arbitrary random number sequence and a pseudorandom function and to execute a plurality of iterations of processing to calculate hash values based on the calculated pseudorandom numbers and information stored in the temporary memory unit and to overwrite the calculated pseudorandom numbers and the hash values on the temporary memory unit;

a procedure to determine a part of the plurality of pseudorandom numbers based on the hash values;

a procedure to transmit the hash values acquired by re-calculating a part of the pseudorandom numbers to the zero-knowledge verification device; and

a procedure to receive data indicating whether to authenticate or to reject from the zero-knowledge verification device after transmitting the hash values to the zero-knowledge verification device.

9. A zero-knowledge proof program used for a zero-knowledge verification device which, under a state where the verification device itself does not know x, verifies whether or not "a zero-knowledge proof device knows the x that satisfies $H = G^x$" according to a request from the zero-knowledge proof device, the zero-knowledge proof program causing a computer to execute:

a procedure to sequentially receive new input data from the zero-knowledge proof device;

a procedure to overwrite hash values of data containing a variable and the input data stored in a temporary memory unit provided in advance as the new variable onto the temporary memory unit every time the data receiving module receives the input data; and

a procedure to judge whether to authenticate or to reject the zero-knowledge proof device based on the variable, and returns a result of the judgment to the zero-knowledge proof device.

# FIG. 1

# FIG. 2

START

CALCULATE $V = \Theta_k(G,H)$ AND WRITE TO STORE[V] — S101

RANDOMLY SELECT $\alpha$-BIT BIT SEQUENCES RandX, RandR — S102

RESPECTIVELY WRITE SELECTED RandX, RandR TO STORE[RandX], STORE[RandR] — S103

VARIABLE j=0 — S104

j=j+1 — S105

S106

$j \geqq N+1$ ?  YES → TO STEP S115 OF FIG. 3

NO

READ RandX AND CALCULATE $Y_0 = F_{\lambda + \xi}(R_{and}X.j)$ — S107

READ RandR AND CALCULATE $R_0 = F_{\lambda + \pi}(R_{and}R,0\|j)$ — S108

CALCULATE $T_0 = \Theta_\kappa(Y_0, R_0)$ — S109

READ V, CALCULATE $V = \Theta_\kappa(V, T_0)$ AND OVERWRITE — S110

READ x, CALCULATE $Y_1 = x + Y_0$ — S111

READ RandR AND CALCULATE $R_1 = F_{\lambda + \pi}(R_{and}R,1\|j)$ — S112

CALCULATE $T_1 = \Theta_\lambda(Y_1, R_1)$ — S113

READ V, CALCULATE $V = \Theta_\kappa(V, T_1)$ AND OVERWRITE — S114

22

# FIG. 3

FROM STEP S106 OF FIG. 2

SECURE STORE [Y] AND WRITE INITIAL VALUE Y = 0 —— S115

VARIABLE j=0 —— S116

j=j+1 —— S117

j≧N+1 ? —— S118

YES

NO

READ RandX AND CALCULATE $Y_0 = F_{\lambda + \zeta}(R_{and}X.j)$ —— S119

CALCULATE $U = \Theta_{\kappa}(V, j)$ —— S120

READ Y, CALCULATE $Y = Y + Y_0$ AND OVERWRITE —— S121

READ G,Y,n AND CALCULATE $A = G^{\gamma} \bmod n$ —— S122

WRITE A TO STORE [A] —— S123

TO STEP S124 OF FIG. 4

EP 2 378 706 A1

# FIG. 4

FROM STEP S123 OF FIG. 3

VARIABLE j=0 — S124

j=j+1 — S125

$j \geqq N+1$ ? — S126  YES

NO

READ RandX AND CALCULATE $Y_0 = F_{\lambda + \zeta}(R_{and}X.j)$ — S127

READ x AND CALCULATE $Y_1 = x + Y_0$ — S128

READ RandR AND CALCULATE $R_0 = F_{\lambda + \pi}(R_{and}R.0\|j)$  $R_1 = F_{\lambda + \pi}(R_{and}R.1\|j)$ — S129

CALCULATE $T_0 = \Theta_\lambda(Y_0, R_0)$  $T_1 = \Theta_\lambda(Y_1, R_1)$ — S130

READ VA AND CALCULATE $c = \Theta_1(V, A, j)$ — S131

SET AS $(Y, T, R) = (Y_c, T_c, R_{1-c})$ AND OUTPUT$(c, Y, R, T)$ — S132

END

24

# FIG. 5

START

CALCULATE $V = \Theta_k (G,H)$ AND WRITE TO STORE [V] — S201

VARIABLE j=0 — S202

j=j+1 — S203

S204
$j \geqq N+1$ ? — YES → TO STEP S212 OF FIG. 6

NO

RECEIVE c, Y, T, R AS INPUTS — S205

S206
C=1 ? — NO

YES

S207
$T_0 = \Theta_\lambda (Y,R)$
$T_1 = T$

$T_0 = T$
$T_1 = \Theta_\lambda (Y,R)$ — S208

READ V, CALCULATE $V = \Theta_\kappa (V, T_0)$ AND OVERWRITE — S209

READ V, CALCULATE $V = \Theta_\kappa (V, T_1)$ AND OVERWRITE — S210

OVERWRITE $C_j$, $Y_j$ DEFINED AS
$C_j = c$, $W_j = Y$ — S211

# FIG. 6

FROM STEP S204 OF FIG. 5

S212

DEFINE AS W = 0, C = 0 AND RESPECTIVELY WRITE TO STORE [W], STORE [C]

VARIABLE j=0 — S213

j=j+1 — S214

S215

$j \geqq N+1$ ? →YES→ TO STEP S219 OF FIG. 7

NO

CALCULATE $U = \Theta_{\kappa + \zeta}(V,j)$ — S216

S217

READ W, Wj, AND OVERWRITE ACQUIRED W AS $W = W + W_j U$

S218

READ C, Cj, AND OVERWRITE ACQUIRED C AS $C = C + C_j U$

# FIG. 7

FROM STEP S215 OF FIG. 6

READ G, H, n, AND CALCULATE
$A = G^W + H^{-C} \bmod n$ — S219

VARIABLE j=0 — S220

j=j+1 — S221

$j \geqq N+1$ ? — S222

YES

NO

READ V — S223

$C_j = \Theta_1 (V.A.j)$ ? — S224

YES

NO

OUTPUT "accept" — S226

OUTPUT "accept" — S225

END

# FIG. 8

EP 2 378 706 A1

# FIG. 9

START

SAME AS STEPS S101 TO 131 OF FIG. 2 TO FIG. 4

SET AS $(Y, T, R) = (Y_c, T_c, R_{1-c})$, AND OUTPUT $(c, Y, R, T)$ TO STORAGE — S132b

OUTPUT ALL $(c, Y, R, T)$ STORED IN STORAGE — S133b

END

# FIG. 10

START

CALCULATE V = $\Theta_k$ (G,H) AND WRITE TO STORE [V] — S201

OUTPUT ALL RECEIVED (c,Y,R,T) TO STORAGE — S201b

SAME AS STEPS S202 TO 204 OF FIG. 5

READ (c,Y,R,T) FROM STORAGE — S205b

SAME AS STEPS S205 TO 226 OF FIG. 5 TO FIG. 7

END

| INTERNATIONAL SEARCH REPORT | International application No. |
|---|---|
| | PCT/JP2009/070605 |

A. CLASSIFICATION OF SUBJECT MATTER
*H04L9/32*(2006.01)i

According to International Patent Classification (IPC) or to both national classification and IPC

B. FIELDS SEARCHED

Minimum documentation searched (classification system followed by classification symbols)
H04L9/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CiNii

C. DOCUMENTS CONSIDERED TO BE RELEVANT

| Category* | Citation of document, with indication, where appropriate, of the relevant passages | Relevant to claim No. |
|---|---|---|
| A | WO 2006/077701 A1 (NEC Corp.), 27 July 2006 (27.07.2006), entire text; all drawings & US 2008/0301449 A1 & EP 1843510 A1 & KR 10-2007-0103467 A & CN 101156349 A | 1-9 |
| A | WO 2007/007836 A1 (Nippon Telegraph And Telephone Corp.), 18 January 2007 (18.01.2007), paragraphs [0004] to [0005], [0073] to [0089] & US 2008/0133912 A1 & EP 1903713 A1 & CN 101080897 A | 1-9 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 February, 2010 (17.02.10) | 02 March, 2010 (02.03.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/070605

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-218858 A  (Nippon Telegraph And Telephone Corp.), 31 July 2003 (31.07.2003), entire text; all drawings (Family: none) | 1-9 |
| A | JP 2005-252349 A  (Nippon Purosesu Kabushiki Kaisha), 15 September 2005 (15.09.2005), entire text; all drawings (Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006077701 PCT
- JP 2000067141 A
- JP 2003218858 A
- JP 2007503134 A
- JP 2008316022 A

**Non-patent literature cited in the description**

- **Claus-Peter.** Schnorr. Efficient Signature Generation by Smart Cards. *J. Cryptology,* 1991, vol. 4 (3), 161-174